# EUROPÄISCHE PATENTSCHRIFT

(11) **EP 0 828 327 B1**
(45) Veröffentlichungstag und Bekanntmachung des Hinweises auf die Patenterteilung: **25.04.2001**
(21) Anmeldenummer: 97890153.6
(22) Anmeldetag: 29.07.1997
(51) Int. Cl.: H02G 1/08

(54) **Anordnung zum Einbringen von Kabeln und/oder Leitungen in ein Installationsrohr**
Device for inserting cables or wires into an installation conduit
Dispositif d'insertion de câbles ou fils dans un tuyau d'installation

(30) Priorität: 03.09.1996 AT 157096
(43) Veröffentlichungstag der Anmeldung: 11.03.1998
(73) Patentinhaber: Sima, Harald, 8530 Deutschlandsberg (AT)
(72) Erfinder: Sima, Harald, 8530 Deutschlandsberg (AT)
(74) Vertreter: Casati, Wilhelm, Dipl.-Ing.

(56) Entgegenhaltungen:
- EP-A- 0 038 273
- WO-A-94/09538
- DE-A- 4 013 548
- FR-A- 2 307 388

## Beschreibung

Die Erfindung bezieht sich auf eine Anordnung zum Einbringen von Kabeln und/oder Leitungen in ein Installationsrohr.

Für die Installation von elektrischen Leitungen ist es in der Regel notwendig, Leitungen und Kabel in handelsübliche, starre oder flexible Rohre einzuziehen, um diese Leitungen den Normen entsprechend zu verlegen, d.h. also vor Beschädigungen und Feuchtigkeit zu schützen. Es soll aber auch möglich sein, Leitungen mittels Flüssigkeiten zu kühlen oder später auszutauschen.

Üblicherweise wird das bisher dadurch erzielt, daß Installationsrohre in Wänden, Decken und Böden von Gebäuden oder aber auch im Erdreich verlegt werden, wonach dann in diese Rohre mittels Einziehhilfen, wie Einziehfedern, Vorspanndrähten u.dgl., die Kabel eingezogen werden. Dazu gibt es überdies auch noch andere Zieheinrichtungen, wie pneumatisch oder hydraulisch betätigte Zieheinrichtungen sowie Vorrichtungen zum Einspülen und Einblasen von Elektroleitungen und Kabeln in die Installationsrohre, wobei durch diese Einziehhilfen Zugkräfte aufgebracht werden, welche dann zu dem Durchziehen der Leitungen bzw. Kabel führen.

Weiters ist eine Anordnung bekannt, bei der die elektrischen Kabel und Leitungen in ein ausgelegtes gerades, noch nicht an seinem Einsatzort befindliches, Rohr mittels diverser Einziehhilfen, wie oben erwähnt, eingezogen werden. Erst danach wird das Rohr mit den bereits eingezogenen Leitungen oder Kabeln an seinem Einsatzort verlegt. Diese Anordnung hat den Vorteil, daß die für die Bögen notwendige Zugkraft entfällt, jedoch ist nach wie vor Zugkraft auf die Kabel aufzubringen, die sich aus dem Reibungsfaktor zwischen Kabel und Rohr, dem Gewicht des Kabels pro Meter, Kabellänge und der Einziehlänge ergibt. Diese benötigte Zugkraft muß mittels der Einziehhilfe auf die Leitung übertragen werden.

In FR-A-2 307 388 ist eine Kabeleinziehvorrichtung solchen Typs mit einer Schubvorrichtung als Einziehhilfe beschrieben. All dies bedeutet einen erheblichen Energieaufwand zur Erzeugung der Zugkraft, Kosten für die Einziehhilfen und auch einen hohen Arbeitsaufwand.

Der Erfindung liegt die Aufgabe zugrunde, eine Anordnung der eingangs genannten Art zu schaffen, bei welcher bei der Einbringung von Kabeln und/oder Leitungen in ein Installationsrohr Energie für die Zugkraft eingespart und die Kosten für die Einziehhilfen und den Arbeitsaufwand reduziert werden können.

Diese Aufgabe wird erfindungsgemäß durch die Merkmale des kennzeichnenden Teils des Anspruchs 1 gelöst. Durch diese Anordnung wird erreicht, daß das Installationsrohr vertikal oder schräg nach unten gerichtet gerade ausgerichtet ist, womit das Einbringen des Kabels oder der Kabel und/oder der Leitungen allein durch die Schwerkraft erfolgen kann.

Vorteilhafterweise kann das Führungsrohr in ein Bohrloch, einen Brunnen od.dgl. in den Erdboden abgesenkt sein, wobei gegebenenfalls das Führungsrohr am unteren Ende dicht abgeschlossen ist. Dadurch ist es möglich, auch größere Längen von Installationsrohren mit Kabeln oder Leitungen zu befüllen, wobei bei am unteren Ende dicht abgeschlossenem Führungsrohr auch in solchen Gebieten eine zuverlässige Befüllung erfolgen kann, in welchen der Grundwasserspiegel deutlich höher als das untere Ende des Führungsrohres liegt.

Die am oberen Ende des Führungsrohres angeordnete Einrichtung zum Einbringen des Kabels oder der Kabel und/oder der Leitungen kann wahlweise gegen eine Einrichtung zum Einführen des Installationsrohres austauschbar sein. Damit wird auf einfache Weise das Befüllen des Führungsrohres und danach dann das Einführen der Leitungen und/oder der Kabel bzw. des Kabels in das Installationsrohr ermöglicht.

Die Einrichtung zum Einführen des Installationsrohres in das Führungsrohr kann an eine Maschine zum Herstellen des Installationsrohres angeschlossen sein, wobei gegebenenfalls der Einrichtung zum Einführen des Installationsrohres eine Ablängeinrichtung nachgeschaltet ist. Damit fällt der herkömmliche Schritt des Einrollens des Installationsrohres nach der Herstellungsmaschine und das spätere Strecken dieses Rohres weg, da es die erfindungsgemäße Ausgestaltung ermöglicht, das Installationsrohr von der Herstellungsmaschine direkt in das Führungsrohr hineinzufördern. Mittels der Ablängeinrichtung wird das Installationsrohr auf die gewünschte Länge gebracht, wonach dann in dieses Installationsrohr die Kabel und/oder die Leitungen eingeführt werden.

Bei einem frei zugänglichen unteren Ende des Führungsrohres kann dieses unten offen sein. Hiebei kann die Einrichtung zum Einführen des Installationsrohres von unten her in das Führungsrohr einmünden. Bei dieser Ausführungsform erübrigt sich der Tausch der Einrichtung zum Einführen des Installationsrohres gegen die Einrichtung zum Einbringen der Leitungen oder Kabel in das Installationsrohr, da bei dieser Anordnung das Installationsrohr von unten her in das Führungsrohr eingebracht, danach abgelängt und von oben her mit dem Kabel oder den Leitungen befüllt wird. Um das Einführen der Kabel und/oder Leitungen in das Installationsrohr von oben her zu erleichtern, kann der Einrichtung zum Einbringen des Kabels oder der Kabel und/oder der Leitungen eine Zentriereinrichtung und eine Halteeinrichtung für das obere Ende des Installationsrohres nachgeschaltet sein.

Schließlich können das einzuführende Kabel und oder die Leitungen bei dünnen oder weichen Kabeln bzw. Leitungen am führenden Ende mit einem Leitgewicht versehen sein, bei einem starren und/oder schweren Kabel bzw. Leitungen kann das führende Ende abgerundet, abgefast oder umgebogen sein. Dadurch wird einerseits einem Verspießen beim Einführen vorgebeugt und anderseits das Eigengewicht des Kabels zum Einführen in entsprechender Weise ausgenutzt.

Beim Herausheben des gerillten, bezogenen Elektroinstallationsrohres aus dem Führungsrohr können ab einer entsprechenden Länge des Rohres und demzufolge höheren Gewichtes Probleme auftreten, im Winter etwa kann das Rohr bei tieferen Temperaturen brechen, bei höheren Außentemperaturen hingegen kann es zu Verformungen des Elektroinstallationsrohres kommen. Dem kann dadurch abgeholfen werden, daß in weiterer Ausgestaltung der Erfindung das beschickte Installationsrohr durch die untere, offene Öffnung des Führungsrohres abziehbar und gegebenenfalls nach Durchlaufen einer in Abziehrichtung des Installationsrohres der unteren Öffnung des Führungsrohres nachgeschalteten Leiteinrichtung, vorzugsweise einer Aufspulvorrichtung zuführbar ist. Dabei stellt sich als weiterer Vorteil die Möglichkeit ein, schon während des Entleerungsvorganges des Installationsrohres, das Führungsrohr von oben bereits wieder zu befüllen.

Eine Ausführungsform der erfindungsgemäßen Anlage sieht vor, daß das unten offene Führungsrohr durch eine, insbesondere durch einen Motor betätigbare Verschlußeinrichtung, z.B. einen Drehschieber, abschließbar ist. Diese Ausführungsform ermöglicht es, während des Befüllens des Installationsrohres das unten offene Führungsrohr zu verschließen.

Das Führungsrohr für die Aufnahme des mit einem oder mehreren Kabeln oder Leitungen zu befüllenden Installationsrohres kann auch in Schächten von Bergwerken angeordnet werden, insbesondere wenn das befüllte Installationsrohr nach unten durch die untere offene Öffnung des Führungsrohres abgezogen wird.

In der Zeichnung sind Ausführungsbeispiele des Erfindungsgegenstandes wiedergegeben.
Fig. 1 zeigt die Anordnung während der Beschickung des Führungsrohres mit dem Installationsrohr von oben.
Fig. 2 gibt die Einrichtung nach Einbringen des Installationsrohres wieder.
Fig. 3 veranschaulicht die Einrichtung während des Einbringens des Kabels in das Installationsrohr bei aufgeschnittenem Installationsrohr.
Fig. 4 veranschaulicht das Aufrollen des mit einem Kabel befüllten Installationsrohres.
Fig. 5 bis 8 zeigen verschiedene Ausführungsvarianten der Spitze des einzubringenden Kabels oder der Leitungen.
Fig. 9 gibt eine andere Ausführungsvariante wieder, bei welcher das Installationsrohr von unten her in das Führungsrohr eingebracht wird.
Fig. 10 und 11 zeigen eine Ausführungsvariante, bei der das befüllte Installationsrohr durch die untere Öffnung des Führungsrohres abgezogen werden kann (nach unten).

Mit 1 sind Führungsrollen bezeichnet, mittels welcher ein Installationsrohr 2 über einen Führungsbogen 3 in ein vertikal nach unten verlaufendes Führungsrohr 4 eingebracht wird, das in den Erdboden 5 eingelassen ist. Anstelle des Aufhängens des Führungsrohres 4 in einer Öffnung des Erdbodens kann das Führungsrohr 4 selbstverständlich auch in einem entsprechend hohen Haus aufgehängt sein.

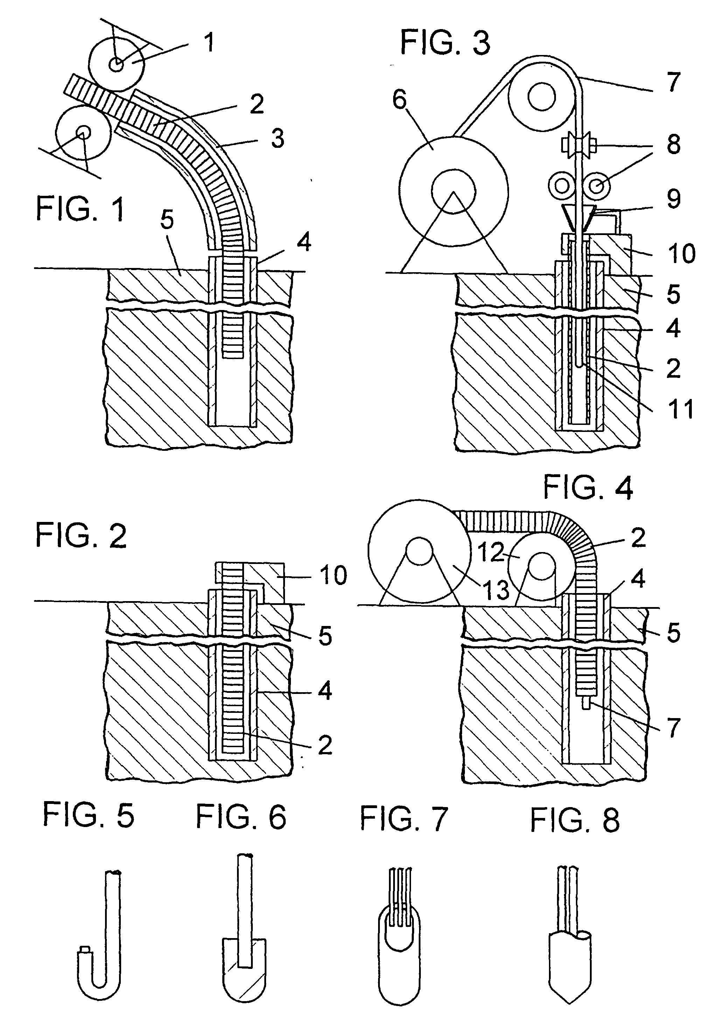

Das Installationsrohr 2 ist nach Beendigung des Einbringens in das Führungsrohr 4 und Wegschwenken des Führungsbogens 3 mittels einer Halterung 10 festgelegt. Oberhalb dieser Halterung 10 wird ein Einführtrichter 9 angeordnet, welcher das Einführen eines mittels Zuführrollen 8 von einer Rolle abgezogenen Kabels 7 in das Installationsrohr 2 erleichtert. Die Spitze des Kabels ist in Fig. 3 mit 11 bezeichnet. Diese Spitze 11 kann entweder bei entsprechend steifem Kabel umgebogen sein, wie dies in Fig. 5 wiedergegeben ist, oder aber die Kabelspitze 11 ist mit einer Rundkappe, wie in Fig. 6 angedeutet, versehen. Bei leichten oder dünnen Kabeln, die geringes Eigengewicht bzw. keine für das Einfädeln in das Führungsrohr ausreichende Steifigkeit aufweisen, wird ein Leitgewicht (Fig. 7) über eine Öse an das Führungsende des Kabels angehängt. Schließlich könnte, wie dies Fig. 8 zeigt, auch die Kabelisolierung bzw. der Kabelmantel abgeschrägt oder abgefast sein.

Nachdem die entsprechende Länge des Kabels 7 in das Installationsrohr 2 eingebracht ist, wird am oberen Ende des Führungsrohres 4 eine Rolle 12 angeordnet, welche das befüllte Installationsrohr zu einer Aufwickeltrommel 13 führt (Fig. 4).

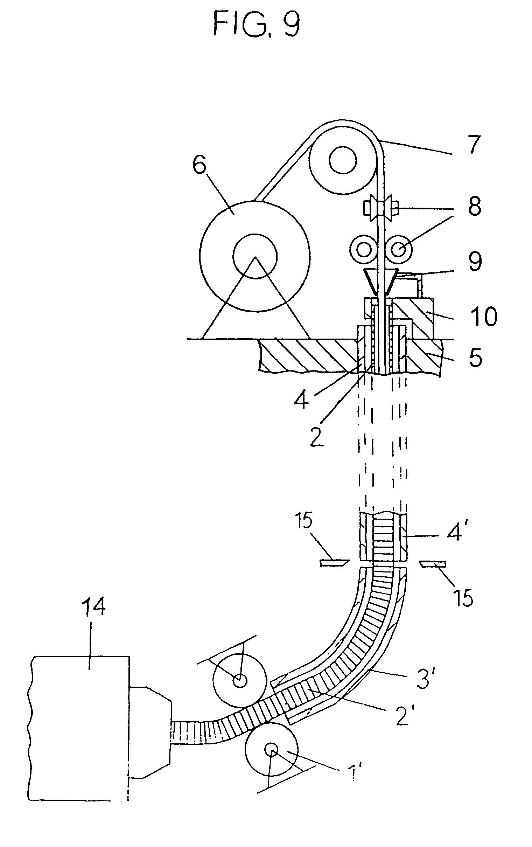

Gemäß der Ausführungsvariante nach Fig. 9 ist die Zuführrolle 1' oder ein Rollenpaar für das Installationsrohr 2' unterhalb des Einführbogens 3' angeordnet, wobei dieser Zuführrolle 1' eine schematisch angedeutete Maschine 14 zur Herstellung des Installationsrohres 2' vorgeschaltet ist. Mit 15 ist eine 0 Ablängeinrichtung bezeichnet, mittels welcher das in der Maschine 14 erzeugte Installationsrohr 2 bzw. 2', nachdem es die Halterung 10 am oberen Ende des Führungsrohres 4 erreicht hat, abgeschnitten werden kann. Das obere Ende wird dann mittels der Halteeinrichtung 10 festgehalten, worauf, wie in Fig. 9 angedeutet, die Befüllung des Installationsrohres 2 mit dem Kabel 7 über die Zuführrollen 8 durch den Trichter 9 hindurch erfolgt, bis die vordere Kabelspitze 11 am unteren Ende des Installationsrohres hervortritt.

Das Führungsrohr 4 bzw. 4' wird im vorliegenden Fall glatt ausgebildet sein, es kann jedoch auch mit Längsriefen versehen sein bzw., falls es innenstrukturiert ist, muß es so strukturiert sein, daß sich das Führungsende des Installationsrohres beim Einbringen in das Führungsrohr weder verhaken noch verspießen kann.

In allen Ausführungsbeispielen ist das Führungsrohr 4 vertikal eingezeichnet. Es kann jedoch auch schräg nach unten verlaufen, wobei der Neigungswinkel so zu wählen ist, daß die aufgrund der Neigung auftretende Reibung zwischen dem Kabel bzw. der Leitung und der Innenwandung des Installationsrohres durch das Eigengewicht bzw. die Vorschubkraft der Rollen 8 überwunden werden kann, sodaß das Einbringen der Kabel und Leitungen in das Installationsrohr durch den Reibungswiderstand nicht verhindert wird.

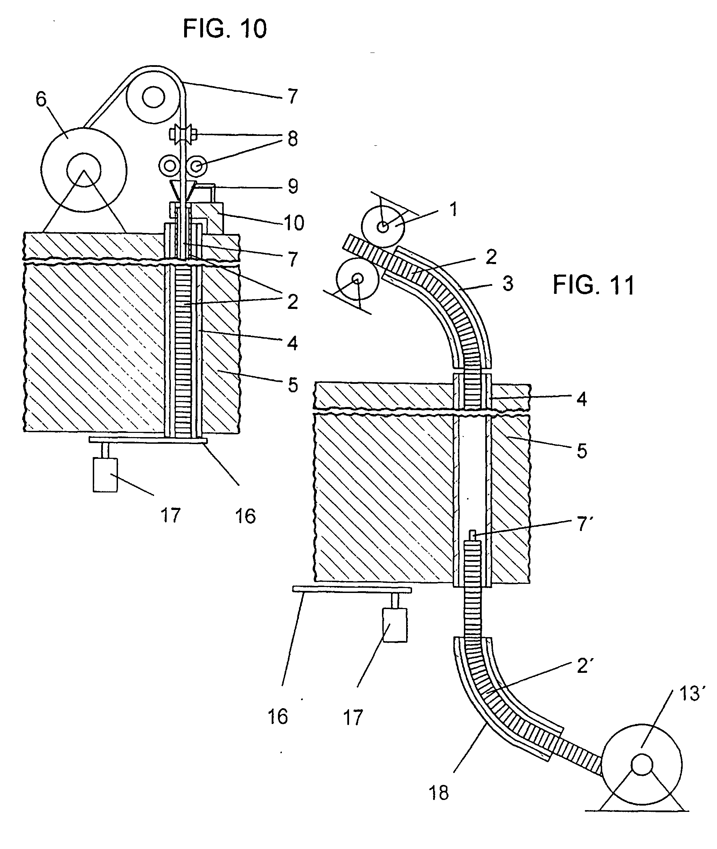

Fig. 10 zeigt das im Führungsrohr 4 befindliche Installationsrohr 2, wie es gerade von oben mittels den vorerwähnten Einrichtungen befüllt wird. Dabei ist das Führungsrohr 4 unten offen. Das offene Ende kann durch eine Verschließeinrichtung, z.B. einen von einem Motor 17 betätigten Drehschieber 16, verschlossen werden.

Fig. 11 veranschaulicht die Entleerung des mit Leitungen und/oder Kabeln 7' bezogenen Elektroinstallationsrohres 2' aus dem Führungsrohr 4 nach unten über eine Leiteinrichtung 18 auf die Aufspulvorrichtung 13' bei offener Verschließeinrichtung für das untere Ende, wobei zur selben Zeit ein leeres Installationsrohr 2 von oben über eine Leiteinrichtung 3 in das Führungsrohr 4 nachgeschoben wird.

## Patentansprüche

1. Anordnung zum Einbringen von Kabeln und/oder Leitungen (7) in ein Installationsrohr (2, 2'), dadurch gekennzeichnet, daß ein vertikal oder schräg nach unten gerichtet verlaufendes, insbesondere von Querrillen oder -riefen freies Führungsrohr (4, 4') zum Aufnehmen des zu beschickenden Installationsrohrs (2) vorgesehen ist, wobei am oberen Ende des Führungsrohrs (4, 4') eine Einrichtung (8) zum Einbringen des Kabels oder der Kabel und/oder der Leitungen (7) angeordnet ist.

2. Anordnung nach Anspruch 1 , dadurch gekennzeichnet, daß die am oberen Ende des Führungsrohres (4, 4') angeordnete Einrichtung (8) zum Einbringen des Kabels oder der Kabel und/oder der Leitungen (7) wahlweise gegen eine Einrichtung (1, 3) zum Einführen des Installationsrohres (2) austauschbar angeordnet ist.

3. Anordnung nach Anspruch 1 oder 2, dadurch gekennzeichnet, daß die Einrichtung (1,3) zum Einführen des Installationsrohres (2) in das Führungsrohr (4, 4') an eine Maschine (14) zur Herstellung des Installationsrohres (2) angeschlossen ist, wobei gegebenenfalls der Einrichtung (1, 3) zum Einführen des Installationsrohres (2) eine Ablängeinrichtung (15) nachgeschaltet ist.

4. Anordnung nach einem der Ansprüche 1 bis 3, dadurch gekennzeichnet, daß der Einrichtung (8) zum Einbringen des Kabels oder der Kabel und/oder der Leitungen (7) eine Zentriereinrichtung (9) und eine Halteeinrichtung (10) für das obere Ende des Installationsrohres (2) nachgeschaltet ist.

5. Anordnung nach einem der Ansprüche 1 bis 4, dadurch gekennzeichnet, daß ein Leitgewicht an dem einzuführenden Kabel oder den Kabeln und/oder den Leitungen (7) bei dünnen oder weichen Kabeln bzw. Leitungen am führenden Ende (11) vorgesehen ist und, bei einem starren und/oder schweren Kabel bzw. Leitung (7) am führenden Ende (11) eine Abrundung, eine Abfasung oder eine Umbiegung vorgesehen ist.

6. Anordnung nach einem der Ansprüche 1 - 5, dadurch gekennzeichnet, daß bei einem frei zugänglichen unteren Ende des Führungsrohres (4, 4') dieses unten offen ist.

7. Anordnung nach Anspruch 6, dadurch gekennzeichnet, daß bei unten offenem Führungsrohr (4, 4') die Einrichtung (1', 3') zum Einführen des Installationsrohres (2') von unten her in das Führungsrohr (4, 4') einmündet.

8. Anordnung nach Anspruch 6 oder 7, dadurch gekennzeichnet, daß das unten offene Führungsrohr (4, 4') durch eine, insbesondere durch einen Motor (17) betätigbare Verschlußeinrichtung, z.B. einen Drehschieber (16), abschließbar ist.

9. Anordnung nach einem der Ansprüche 6 bis 8, dadurch gekennzeichnet, daß das beschickte Installationsrohr (2') durch die untere, offene Öffnung des Führungsrohres (4, 4') abziehbar und gegebenenfalls nach Durchlaufen einer in Abziehrichtung des Installationsrohres (2) der unteren Öffnung des Führungsrohres (4, 4') nachgeschalteten Leiteinrichtung (18) vorzugsweise einer Aufspuleinrichtung (13') zuführbar ist.

10. Anordnung nach einem der Ansprüche 1 bis 5, dadurch gekennzeichnet, daß das Führungsrohr (4) in ein Bohrloch, einen Brunnen od.dgl. in den Erdboden abgesenkt ist, wobei gegebenenfalls das Führungsrohr (4) am unteren Ende dicht abgeschlossen ist.

## Claims

1. An arrangement for the insertion of cables and/or conduits (7) into an installation pipe (2, 2'), characterised in that a vertically or obliquely downwardly extending guide pipe (4, 4'), particularly one which is free from transverse grooves or ribs, is provided to accommodate the installation pipe which is to be loaded, whereby at the upper end of the guide pipe (4, 4') there is a means of inserting the cable or cables and/or conduits (7).

2. An arrangement according to Claim 1, characterised In that the means (8) of inserting the cable or cables and/or conduits (7) and which is disposed at the upper end of the guide pipe (4, 4') is optionally adapted to be exchanged for a means (1, 3) for inserting the installation pipe (2).

3. An arrangement according the Claim 1 or 2, characterised in that the means (1, 3) for inserting the installation pipe (2) into the guide pipe (4, 4') is connected to a machine (14) for producing the installation pipe (2), and device (15) for cutting pipe to length possibly being disposed downstream of the means (1, 3) of inserting the installation pipe (2).

4. An arrangement according to one of Claims 1 to 3, characterised in that downstream of the means (8) of inserting the cable or cables and/or the conduits there is a centring means (9) and a retaining means (10) for the upper end of the installation pipe (2).

5. An arrangement according to one of Claims 1 to 4, characterised in that in the case of thin or soft cables, a guide weight is provided on the leading end (11) of the cable or cables and/or conduits (7) which is/are to be inserted and in that, in the case of a rigid and/or heavy cable or conduit (7) a rounding or chamfer or a bent over portion is provided at the guiding end (11).

6. An arrangement according to one of Claims 1 to 5, characterised in that if the bottom end of the guide pipe (4, 4') is freely accessible then it is downwardly open.

7. An arrangement according to Claim 6, characterised in that in the case of a guide pipe (4, 4') which is open at the bottom, the means (1', 3') of inserting the installation pipe (2') from below opens out in the guide pipe (4, 4').

8. An arrangement according to Claim 6 or 7, characterised in that the open-bottomed guide pipe (4, 4') can be occluded by a closure means, e. g. a rotary slide valve (16), which can be actuated by a motor (17).

9. An arrangement according to one of Claims 6 to 8, characterised in that the loaded installation pipe (2') can be pulled off through the bottom, open aperture of the guide pipe (4, 4') and, possibly after it has passed though guide means (18) adjacent the bottom aperture of the guide pipe (4, 4') in the direction in which the installation pipe (2) is pulled off and can preferably be fed to a reeling on means (13').

10. An arrangement according to one of Claims 1 to 5, characterised in that the guide pipe (4) is lowered into a borehole, a spring or the like and into the ground, the guide pipe (4) possibly being closed off in sealing-tight manner at the bottom end.

## Revendications

1. Dispositif pour enfiler des câbles et/ou conduites (7) dans un tube d'installation (2, 2'), caractérisé en ce qu'il est prévu un tube de guidage (4, 4') s'étendant verticalement ou obliquement vers le bas, en particulier exempt de rainures ou stries transversales, pour recevoir le tube d'installation à charger, un dispositif (8) destiné à l'enfilage du câble ou des câbles et/ou des conduites (7) étant agencé à l'extrémité supérieure du tube de guidage (4, 4').

2. Dispositif selon la revendication 1, caractérisé en ce que le dispositif (8) agencé à l'extrémité supérieure du tube de guidage (4, 4') et destiné à enfiler le câble ou les câbles et/ou les conduites (7) est agencé de façon à pouvoir être remplacé sélectivement par un dispositif (1, 3) destiné à l'introduction du tube d'installation (2).

3. Dispositif selon la revendication 1 ou 2, caractérisé en ce que le dispositif (1, 3) destiné à l'introduction du tube d'installation (2) dans le tube de guidage (4, 4') est raccordé à une machine (14) de fabrication du tube d'installation (2), un dispositif de coupe à longueur (15) étant éventuellement agencé en aval du dispositif (1, 3) destiné à l'introduction du tube d'installation (2).

4. Dispositif selon l'une des revendications 1 à 3, caractérisé en ce qu'en aval du dispositif (8) destiné à enfiler le câble ou les câbles et/ou les conduites (7) sont agencés un dispositif de centrage (9) et un dispositif de retenue (10) pour l'extrémité supérieure du tube d'installation (2).

5. Dispositif selon l'une des revendications 1 à 4, caractérisé en ce que, dans le cas de câbles ou conduites minces ou mous, il est prévu à l'extrémité de tête (11), un poids guide sur le ou les câbles et/ou les conduites (7) à introduire et en ce que, dans le cas d'un câble ou d'une conduite (7) rigide et/ou lourd, il est prévu à l'extrémité de tête (11) un arrondi ou un chanfrein, ou bien une partie recourbée.

6. Dispositif selon l'une des revendications 1 à 5, caractérisé en ce que, dans le cas où l'extrémité inférieure du tube de guidage (4, 4') est librement accessible, ce tube est ouvert en bas.

7. Dispositif selon la revendication 6, caractérisé en ce que, dans le cas d'un tube de guidage (4, 4') ouvert en bas, le dispositif destiné à l'introduction du tube d'installation (2') débouche dans le tube de guidage (4, 4') par le bas.

8. Dispositif selon la revendication 6 ou 7, caractérisé en ce que le tube de guidage (4, 4') ouvert en bas peut être obturé par un dispositif obturateur, par exemple une vanne tournante (16), pouvant être actionné par un moteur (17).

9. Dispositif selon l'une des revendications 6 à 8, caractérisé en ce que le tube d'installation chargé (2') peut être tiré à travers l'ouverture inférieure ouverte du tube de guidage (4, 4') et peut être acheminé de préférence à un dispositif d'enroulement (13') après avoir éventuellement traversé un dispositif guide (18) placé en aval de l'ouverture inférieure du tube de guidage (4, 4') dans le sens du tirage du tube d'installation (2).

10. Dispositif selon l'une des revendications 1 à 5, caractérisé en ce que le tube de guidage (4) est abaissé dans un forage, un puits ou analogue dans le sol, le tube de guidage (4) étant éventuellement obturé à joint étanche à l'extrémité inférieure.
